# EUROPÄISCHE PATENTSCHRIFT

(11) **EP 2 082 831 B1**
(45) Veröffentlichungstag und Bekanntmachung des Hinweises auf die Patenterteilung: **11.08.2010**
(21) Anmeldenummer: 08020847.3
(22) Anmeldetag: 01.12.2008
(51) Int. Cl.: B23Q 1/66, B23Q 7/14

(54) **Bearbeitungszentrum mit einem Werkstückwechsler**
Processing centre with a tool changer
Centre de traitement doté d'un dispositif de changement d'outil

(30) Priorität: 24.01.2008 DE 102008005957
(43) Veröffentlichungstag der Anmeldung: 29.07.2009
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl.-Ing., 78598 Königsheim (DE)
(74) Vertreter: Hager, Thomas Johannes

(56) Entgegenhaltungen:
- EP-A- 1 747 843
- JP-A- 57 201 149
- US-A- 4 480 738
- US-A- 4 797 989

## Beschreibung

Die Erfindung betrifft ein Bearbeitungszentrum mit einem Werkstückwechsler zum Verfahren von zu bearbeitenden Werkstücken und/oder Werkstückpaletten zwischen wenigstens einem Rüsttisch außerhalb des Bearbeitungszentrums und einem nicht horizontal verfahrbaren Werkstücktisch des Bearbeitungszentrums, wobei der Werkstückwechsler ein um eine vertikale Achse schwenkbares und in einer senkrecht zu dieser Achse liegenden Ebene linear verfahrbaren Doppelgreifer für die Werkstücke und/oder die Werkstückpaletten besitzt.

Um die unproduktiven Verlustzeiten beim Werkstückwechselvorgang zu minimieren, werden zunehmend Bearbeitungszentren zum Bohren, Fräsen und Drehen mit automatischen Werkstückwechslern ausgestattet. Diese Werkstückwechsler können integrierter Bestandteil des Bearbeitungszentrums sein, es kann sich aber auch um eigenständige Maschinen handeln, die an das jeweilige Bearbeitungszentrum angestellt werden. Die erste Version hat den Vorteil, dass der Werkstückwechsler in der Regel relativ Platz sparend im Bearbeitungszentrum integriert ist. Die zweite Version hat den Vorteil, dass ein nachträglicher Anbau ohne Probleme auch an einem Standard-Bearbeitungszentrum möglich ist.

Mit diesen Werkstückwechslern wird ein zu bearbeitendes Werkstück automatisch in den Arbeitsraum des Bearbeitungszentrums platziert und dann über automatische Spannvorrichtungen mit dem Werkstücktisch des Bearbeitungszentrums verbunden. Nach der Fertigstellung der Werkstückbearbeitung wird das Werkstück wieder vom Werkstückwechsler aus dem Arbeitsraum des Bearbeitungszentrums herausgeführt und in ein Werkstücklager oder auf einem Werkstückrüstplatz oder dergleichen abgelegt.

Um eine standardisierte Schnittstelle zwischen dem Werkstück und dem Werkstücktisch des Bearbeitungszentrums einerseits und zwischen dem Werkstück und dem Werkstückgreifer des Werkstückwechslers anderseits zu schaffen, sind die ein- und auszuwechselnde Werkstücke in der Regel auf standardisierte Platten, so genannte Werkstückpaletten, aufgespannt. Diese Werkstückpaletten werden wiederum über standardisierte Spannelemente, so genannte Nullpunktspannsysteme, auf den jeweiligen Werkstücktisch automatisch fest gespannt.

Wird nachfolgend von einer Werkstückpalette gesprochen, so ist immer ein Werkstück gemeint, das auf einer standardisierten Palette aufgespannt ist. Natürlich ist es im Prinzip auch möglich, ein Werkstück ohne diese standardisierten Paletten mit den nachfolgend beschriebenen Werkstückwechslern zu transportieren. Der Schutzbereich dieser Anmeldung umfasst daher ausdrücklich auch Werkstücke, die ohne Werkstückpalette transportiert werden.

In der EP 1 747 843 B1 ist ein gattungsgleiches Bearbeitungszentrum mit einem Werkstückwechsler beschrieben, der als separate Maschine oder als integrierter Bestandteil hinter einem Bearbeitungszentrum in Gantry-Bauform angebaut bzw. eingebaut ist. Der in der EP 1 747 843 B1 beschriebene Werkstückwechsler besitzt einen Werkstückdoppelgreifer und einen Werkstückrüstplatz. Der Werkstückdoppelgreifer ist über eine linear verfahrbare Dreheinrichtung zwischen dem Werkstücktisch des Bearbeitungszentrums und dem Rüstplatz des Werkstückwechslers verfahrbar.

Der Vorteil dieses Werkstückwechslers ist darin zu sehen, dass die Zugänglichkeit des Bedienbereiches vor dem Bearbeitungszentrums nicht durch den Werkstückwechsler eingeschränkt wird, so dass der Bediener weiterhin ungehinderten Zugang zum Arbeitsbereich der Maschine erhält. Des Weiteren ist der Platzbedarf dieser Maschinenkombination von Bearbeitungszentrum und Werkstückwechsler erheblich kleiner als bei üblichen Maschinenanordnungen (siehe zum Beispiel DE 10 2006 024 407 A1).

Die in der EP 1 747 843 B1 offenbarte Anordnung von Bearbeitungszentrum, Werkstückwechsler und Werkstückrüstplatz hat jedoch den Nachteil, dass der Werkstückdoppelgreifer beim Wechselvorgang (bearbeitete Werkstückpalette wird gegen unbearbeitete Werkstückpalette ausgetauscht) den Rüstplatz überfahren muss (siehe Fig. 2 der EP 1 747 843 B1). Daraus resultiert, dass beim Wechselvorgang keine Rüstarbeiten am Rüstplatz durchgeführt werden können. Es können mit diesem System nur zwei Werkstückpaletten vorgehalten werden, nämlich eine zu bearbeitende Werkstückpalette im Bearbeitungszentrum und eine zu rüstende oder schon fertig gerüstete Werkstückpalette im Rüstplatz. Dies bedeutet, dass die Speicherkapazität dieses Systems immer auf zwei Werkstückpaletten begrenzt ist und dass ein Rüsten einer Werkstückpalette parallel zum Wechselvorgang (alte gegen neue Palette austauschen) nicht möglich ist. Dies hat sich in der Praxis als nachteilig herausgestellt.

Ausgehend aus diesem Stand der Technik liegt der vorliegenden Erfindung die Aufgabe zugrunde, die bekannte Lösung unter Beibehaltung ihrer Vorteile dahingehend weiter zu verbessern, dass die Speicherkapazität an einzuwechselnden Werkstückpaletten erhöht wird und dass ein Rüsten einer Werkstückpalette auch während eines Werkstückwechselvorgangs möglich wird. Weiterhin soll eine Möglichkeit geschaffen werden, drei Werkstückpaletten im System vorzuhalten, nämlich eine zu bearbeitende Werkstückpalette auf dem Werkstücktisch des Bearbeitungszentrums, eine gerüstete Werkstückpalette auf dem Doppelgreifer des Werkstückwechslers und eine zu rüstende oder schon gerüstete Werkstückpalette auf dem Rüstplatz des Werkstückwechslers.

Erfindungsgemäß wird diese Aufgabe bei einem Bearbeitungszentrum mit einem Werkstückwechsler zum Verfahren von zu bearbeitenden Werkstücken und/oder Werkstückpaletten zwischen wenigstens einem Rüsttisch außerhalb des Bearbeitungszentrums und einem nicht horizontal verfahrbaren Werkstücktisch des Bearbeitungszentrums, wobei der Werkstückwechsler ein um eine vertikale Achse schwenkbaren und in einer senkrecht zu dieser Achse liegenden Ebene linear verfahrbaren Doppelgreifer für die Werkstücke und/oder die Werkstückpaletten besitzt, dadurch gelöst, dass der Rüsttisch auf der Rückseite des Bearbeitungszentrums außerhalb des Schwenkbereichs des Doppelgreifers angeordnet ist und dass der Doppelgreifer über eine lineare Führungseinrichtung, die als beidseitig ausziehbarer Teleskopauszug ausgebildet ist, maschinen- und rüstplatzseitig verfahrbar ist.

Dadurch, dass erfindungsgemäß der Rüsttisch außerhalb des Schwenkbereichs des Doppelgreifers liegt, ist der Rüsttisch räumlich vom Doppelgreifer entkoppelt, so dass der Doppelgreifer beim Wechselvorgang (bearbeitete Werkstückpalette wird gegen unbearbeitete Werkstückpalette ausgetauscht) den Rüsttisch nicht mehr überfahren muss. Außerdem ist durch die Anordnung des Rüsttisches und des Doppelgreifers auf der Rückseite des Bearbeitungszentrums eine Beladung des Werkstücktisches von hinten möglich, so dass der Bedienbereich vor dem Bearbeitungszentrum nicht eingeschränkt wird.

Die Ausgestaltung der der Führungseinrichtung als beidseitig ausziehbarer Teleskopauszug ergibt sich weiterhin beim Schwenken der linearen Führungseinrichtung ein relativ kleiner Störkreis, der nicht über den Störkreis der Werkstückpalette (Doppelgreifer) hinausgeht.

Der Vorteil der Erfindung liegt insbesondere auch darin, dass sowohl durch den Doppelgreifer als auch durch den Rüsttisch jeweils eine neue einzuwechselnde Werkstückpalette bereitgestellt wird, so dass praktisch ein Puffer von zwei Werkstückpaletten gebildet werden kann. Durch die erfindungsgemäßen Maßnahmen wird die Verfügbarkeit und somit die Wirtschaftlichkeit des Bearbeitungszentrums mit Werkstückwechsler erheblich verbessert und dies ohne große konstruktive Änderungen am bestehenden Maschinenkonzept. Auch der Platzbedarf vergrößert sich bei dem neuen Maschinenkonzept nur unwesentlich.

Vorteilhafte Ausgestaltungen ergeben sich aus den Unteransprüchen.

Gemäß einer bevorzugten Ausgestaltung sind der Werkstückwechsler und der Rüsttisch stationär angeordnet. Eine stationäre Anordnung des Werkstückwechslers bedingt einen konstruktiv einfacheren Aufbau, da z. B. keine beweglichen Energiezuführungen notwendig sind. Dadurch ist die gewählte Konstruktion auch weniger störungsanfällig als ein verfahrbarer Werkstückwechsler. Darüber hinaus kann der Werkstückwechsler außerhalb des eigentlichen Maschinenraumes angeordnet werden, so dass sich keine Einschränkung in der Werkstückhöhe im Maschinenraum durch den mechanischen Aufbau der Hubeinrichtung ergeben.

Nach einer bevorzugten Weiterbildung kann der Teleskopauszug als 2-fach-Teleskopauszug ausgebildet sein, der für die lineare Führung des Doppelgreifers nach zwei Seiten ausziehbar ist. Infolge dieser Maßnahme ist es besonders einfach möglich, den Rüsttisch vom Doppelgreifer Platz sparend zu entkoppeln. Nach einer alternativen Ausführungsform kann der Rüsttisch auch als drehbarer Werkstückspeicher mit integrierten Rüstplätzen ausgebildet sein.

Weiterhin ist nach einer bevorzugten Ausgestaltung der Rüsttisch durch eine Schutzeinrichtung vom Doppelgreifer getrennt, so dass für das Bedienpersonal ein gefahrloses Rüsten während des Wechselvorgangs möglich wird. Beim Eintritt von einem Bediener in den Bereich vor oder neben dem Rüsttisch wird die trennende Schutzeinrichtung aktiviert und verhindert sicher, dass der Doppelgreifer nicht aufgrund eines Fehlers in den Bereich des Rüsttisches einfahren kann.

Die Schutzeinrichtung kann vorteilhafterweise berührungslos, insbes, durch eine Lichtschranke oder einen Scanner, aktivierbar sein. Eine derartige Schutzeinrichtung kann beispielsweise als verfahrbare Trennwand ausgebildet sein. Hierdurch wird beim Eintritt des Bedieners in den Bereich des Rüsttisches über die berührungslose Personenerfassung die Schutzeinrichtung automatisch aktiviert und der Doppelgreifer kann nicht mehr in den Bereich des Rüsttisches einfahren.

Es sind aber auch Systeme denkbar, bei denen die trennende Schutzeinrichtung über einen elektromechanisch wirkenden Sicherheitsschalter oder über einen berührungslos wirkenden Sicherheitsschalter aktiviert wird. Der Sicherheitsschalter kann dabei mit der Schutzeinrichtung am Rüsttisch gekoppelt sein und beim Öffnen oder Schließen der Trennwand die Schutzeinrichtung aktivieren, so dass der Doppelgreifer nicht mehr in den Bereich des Rüsttisches einfahren kann.

Weitere Einzelheiten, Merkmale und Vorteile der Erfindung ergeben sich aus nachfolgender Beschreibung anhand der Zeichnungen. Es zeigen:
- Figur 1: eine Seitenansicht eines Bearbeitungszentrums mit integriertem Werkstückwechsler gemäß einer ersten Ausführungsform,
- Figur 2: das Bearbeitungszentrum nach Figur 1 in einer Draufsicht, und
- Figur 3: eine Seitenansicht des Bearbeitungszentrums mit integriertem Werkstückwechsler gemäß einer zweiten Ausführungsform.

Das in den Figuren dargestellte Bearbeitungszentrum ist nach Art einer Gantry-Maschine ausgebildet und dient insbesondere zur Bohr-, Fräs- und Drehbearbeitung von Werkstücken. Dieses Bearbeitungszentrum besitzt ein Maschinenbett 10, auf dem sich ein motorisch angetriebener Längsschlitten 15 in einer horizontalen Längsrichtung Y bewegen kann. An diesem Längsschlitten 15 ist ein Querschlitten 16 geführt, der sich motorisch in einer horizontalen X-Richtung bewegen kann. An diesem Querschlitten 16 wiederum ist eine motorisch angetriebene Werkzeugspindel 17 in der vertikalen Z-Richtung motorisch verschiebbar, die zum rotatorischen Antrieb von dort auswechselbar eingespannten Werkzeugen 18 dient.

Das Bearbeitungszentrum ist durch eine Querwandung 19 in einen vorderen Bearbeitungsbereich 20 und einen hinteren Zuführbereich 21 für Werkstücke unterteilt.

Im vorderen Bearbeitungsbereich 20 ist ein als Schwenktisch ausgearbeiteter Werkstücktisch 22 schwenkbar bzw. drehbar gelagert.

In den hinteren Zuführbereich 21 greift der Schwenkradius 25 eines um eine vertikale Achse schwenkbaren, mit einem Werkstück oder einer Werkstückpalette 31, 32 versehenen Doppelgreifers 26 eines Werkstückwechslers 37 ein.

Der Werkstückwechsler 37 besitzt eine Hubeinrichtung, auf der sowohl auf der dem Bearbeitungszentrum zugewandten Seite als auch auf der dem Rüsttisch 30 zugewandten Seite jeweils ein als 2-fach-Teleskopauszug ausgebildeter Teleskopauszug 36 angeordnet ist, der nicht nur eine horizontale Linearbewegung ausführen, sondern bei einem Schwenkvorgang des Doppelgreifers 26 auch mitgeschwenkt werden kann.

Der Werkstückwechsler 37 ist mit einem Rüsttisch 30, der zur Vorbereitung von Werkstücken oder Werkstückpaletten 31 vor der Bearbeitung durch das Bearbeitungszentrum dient, auf der Rückseite des Bearbeitungszentrums auf dem Maschinenbett 10 des Bearbeitungszentrums stationär, d.h. nicht verfahrbar angeordnet.

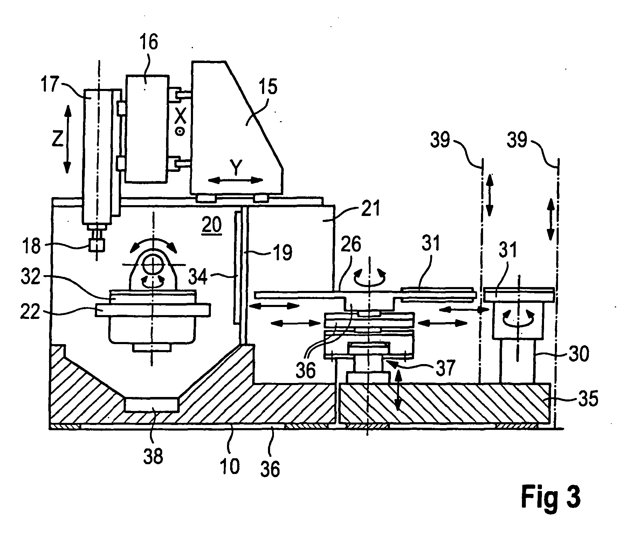

In einer weiteren Ausführungsvariante (Figur 3) ist der Werkstückwechsler 37 zusammen mit einem Rüsttisch 30 auf einem vom Bearbeitungszentrum separaten Grundgestell 35 stationär, d. h. nicht verfahrbar angeordnet. Diese Ausführung hat den besonderen Vorteil, dass Schwingungen nicht in das Maschinenbett 10 des Bearbeitungszentrums gelangen können.

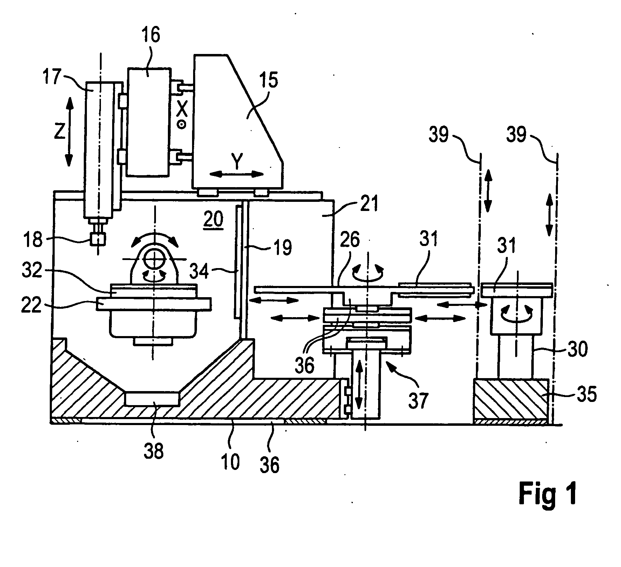

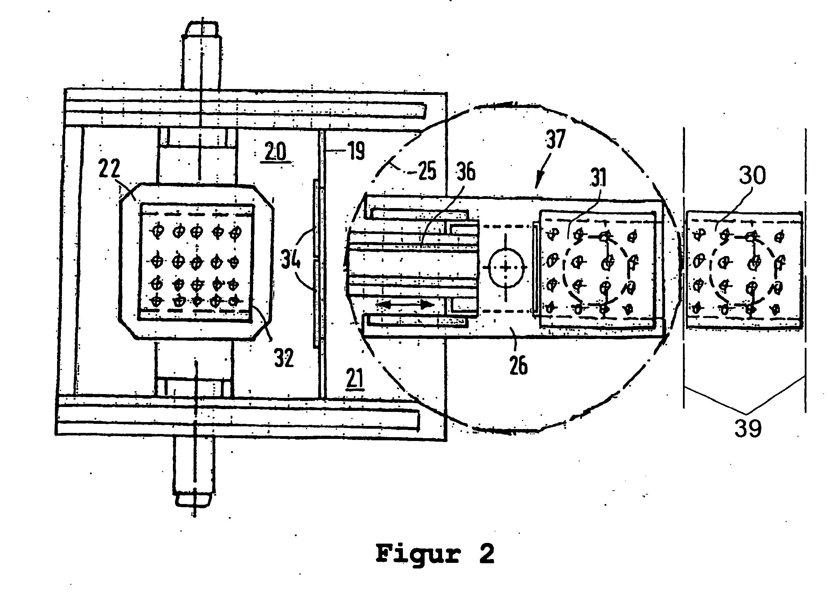

In den Figuren 1 und 2 befindet sich der Doppelgreifer 26 in einer Verfahrposition, in der einer seiner beiden Greifer eine vorbereitete Werkstückpalette 31 vom Rüsttisch 30 übernommen hat. Dazu wird der Teleskopauszug 36 in Richtung auf den Rüsttisch 30 ausgefahren, bis einer der beiden Greifer die auf dem Rüsttisch 30 gelegene Werkstückpalette 31 untergreift. Dann erfolgt eine Hubbewegung, durch die die Werkstückpalette 31 vom Rüsttisch 30 abgehoben wird. Nun verfährt der Doppelgreifer 26 mittels des Teleskopauszugs 36 die vom Rüsttisch 30 abgenommene Werkstückpalette 31 in Richtung auf das Bearbeitungszentrum. Dieser Zustand ist in den Figuren 1 und 2 dargestellt. In diesem Zustand befindet sich eine weitere Werkstückpalette 31 auf dem Rüsttisch 30 und noch eine weitere Werkstückpalette 32 mit einem bereits bearbeiteten Werkstück befindet sich auf dem Werkstücktisch 22.

Aus der in den Figuren 1 und 2 dargestellten Position verfährt der Doppelgreifer 26 anschließend von hinten in das Bearbeitungszentrum zu der Werkstückpalette 32, die sich auf dem Werkstücktisch 22 befindet und die bereits bearbeitet ist Die Querwandung 19 besitzt eine entsprechende Durchgangsöffnung, die durch eine mechanische Trenneinrichtung 34 während des Bearbeitungsvorgangs verschlossen ist Zum Werkstückwechsel öffnen sich die Schwenk- oder Schiebetüren 34, und der Doppelgreifer 26 kann dadurch mit seinem zweiten unbeladenen Greifer unter die Werkstückpalette 32 auf dem Werkstücktisch 22 fahren. Durch einen Hubvorgang wird diese Werkstückpalette 32 nach entsprechender Entriegelung abgehoben, und der Doppelgreifer 26 verfährt wiederum in die in den Figuren 1 und 2 dargestellte Position. Durch einen Schwenkvorgang um 180°, der außerhalb des Rüsttisches 30 abläuft, werden die beiden Werkstückpaletten 31, 32 in ihren Positionen ausgetauscht. Durch ein weiteres Verfahren des Teleskopauszuges 36 wird die unbearbeitete Werkstückpalette 31 zum Werkstücktisch 22 verfahren und dort durch Absenken auf dem Werkstücktisch 22 abgelegt. Durch einen Schwenkvorgang um 180°, der außerhalb des Rüsttisches 30 abläuft, wird die bearbeitete Werkstückpalette 32 nun so verschwenkt, dass der nun unbeladene Greifer in Richtung des Rüsttisches 30 weist. Danach wird durch ein weiteres Verfahren des Teleskopauszuges 36 die zweite unbearbeitete Werkstückpalette 31 durch Abheben vom Rüsttisch aufgenommen. Durch einen weiteren Schwenkvorgang um 180°, der außerhalb des Rüsttisches 30 abläuft, werden die beiden Werkstückpaletten 32, 31 in ihren Positionen ausgetauscht. Durch ein weiteres Verfahren des Teleskopauszuges 36 kann dann die bearbeitete Werkstückpalette 32 auf den nun leeren Rüsttisch 30 abgelegt werden. Danach wird durch einen weiteren Schwenkvorgang um 180° der Doppelgreifer in die Ausgangsposition der Figur 1 gebracht. Die unbearbeitete Werkstückpalette weist in Richtung des Rüsttisches 30.

Beim Werkstückwechsler 37 ist es wesentlich, dass der Doppelgreifer 26 eine Schwenkbewegung und eine horizontale Linearbewegung durchführen kann.

Der Rüsttisch 30 kann auch um eine vertikale Achse schwenkbar ausgebildet sein, um die Positionierung der Werkstücke beziehungsweise Werkstückpaletten 31 optimal durchführen zu können.

Das Maschinenbett 10 ist im Bereich unterhalb des vorderen Bearbeitungsbereichs 20 konisch nach unten hin zulaufend ausgebildet, so dass eine Spänerutsche zu einer Späneabführeinrichtung 38 gebildet wird, die beispielsweise als Förderband ausgebildet sein kann.

Zwischen dem Doppelgreifer 26 und dem Rüsttisch 30 ist eine trennende Schutzeinrichtung 39 vorgesehen, so dass für das Bedienpersonal ein gefahrloses Rüsten während des Wechselvorgangs möglich wird. Die Schutzeinrichtung 39 kann berührungslos zum Beispiel über eine Lichtschranke oder über einen Scanner erfolge.

Zusätzlich kann auch der Zugang zum Rüsttisch 30 über eine derartige Schutzeinrichtung überwacht werden.

Die Schutzeinrichtung 39 kann beispielsweise durch vertikal verfahrbare Gitterwände gebildet sein, wie dies durch die Doppelpfeile in Figur 1 angedeutet ist.

### Bezugszeichenliste:

- 10: Maschinenbett
- 15: Längsschlitten
- 16: Querschlitten
- 17: Werkzeugspindel
- 18: Werkzeug
- 19: Querwandung
- 20: vorderer Bearbeitungsbereich
- 21: hinterer Zuführbereich
- 22: Werkstücktisch
- 25: Schwenkradius
- 26: Doppelgreifer
- 30: Rüsttisch
- 31: Werkstück oder Werkstückpalette
- 32: Werkstückpalette
- 34: Trenneinrichtung
- 35: Grundgestell
- 36: Teleskopauszug
- 37: Werkstückwechsler
- 38: Späneabführeinrichtung
- 39: Schutzeinrichtung

## Patentansprüche

1. Bearbeitungszentrum mit einem nicht horizontal verfahrbaren Werkstücktisch (22), einem Rüsttisch (30) außerhalb und auf der Rückseite des Bearbeitungszentrums, und einem Werkstückwechsler (37) zum Verfahren von zu bearbeitenden Werkstücken und/oder Werkstückpaletten (31, 32) zwischen dem Rüsttisch (30) und dem Werkstücktisch (22) des Bearbeitungszentrums wobei der Werkstückwechsler (37) einen um eine vertikale Achse schwenkbaren und in einer senkrecht zu dieser Achse liegenden Ebene linear verfahrbaren Doppelgreifer (26) für die Werkstücke und/oder die Werkstückpaletten (31, 32) besitzt, **dadurch gekennzeichnet, dass** der Rüsttisch (30) außerhalb des Schwenkbereichs des Doppelgreifers (26) angeordnet ist und dass der Doppelgreifer (26) über eine lineare Führungseinrichtung, die als beidseitig ausziehbarer Teleskopauszug (36) ausgebildet ist, maschinen- und rüstplatzseitig verfahrbar ist.

2. Bearbeitungszentrum nach Anspruch 1 oder 2, **dadurch gekennzeichnet, dass** der Werkstückwechsler (37) und der Rüsttisch (30) stationär auf einem vom Bearbeitungszentrum separaten Grundgestell (35) angeordnet sind.

3. Bearbeitungszentrum nach Anspruch 1 oder 2, **dadurch gekennzeichnet, dass** der Teleskopauszug als 2-fach-Teleskopauszug (36) ausgebildet ist.

4. Bearbeitungszentrum nach einem der Ansprüche 1 bis 3, **dadurch gekennzeichnet, dass** der Rüsttisch (30) als drehbarer Werkstückspeicher mit integrierten Rüstplätzen ausgebildet ist.

5. Bearbeitungszentrum nach einem der Ansprüche 1 bis 4, **dadurch gekennzeichnet, dass** der Rüsttisch (30) durch eine Schutzeinrichtung (39) vom Doppelgreifer (26) getrennt ist.

6. Bearbeitungszentrum nach Anspruch 5, **dadurch gekennzeichnet, dass** die Schutzeinrichtung (39) berührungslos, insbes, durch eine Lichtschranke oder einen Scanner, aktivierbar ist.

## Claims

1. A processing center including a non-horizontally moveable workpiece table (22), a mounting table (30) outside and on the rearside of the processing center, and a workpiece changer (37) for moving workpieces and/or workpiece pallets (31, 32) to be processed between the mounting table (30) and the workpiece table (22) of the processing center, the workpiece changer (37) comprising a double gripper (26) for the workpieces and/or the workpiece pallets (31, 32), the double gripper being pivotal around a vertical axis and linearly movable in a level perpendicular to said axis, **characterized in that** the mounting table (30) is arranged outside the pivoting range of the double gripper (26) and that the double gripper (26) is movable on the machining and mounting side by a linear guiding unit which is designed as a two-way telescopic slide-out (36).

2. The processing center of claim 1 or 2, **characterized in that** the workpiece changer (37) and the mounting table (30) are arranged stationarily on a base frame (35) separate from the processing center.

3. The processing center of claim 1 or 2, **characterized in that** the telescopic slide-out is designed as a two-way telescopic slide-out (36).

4. The processing center of one of claims 1 to 3, **characterized in that** the mounting table (30) is designed as a rotatable workpiece storage having integrated mounting spaces.

5. The processing center of one of claims 1 to 4, **characterized in that** the mounting table (30) is separated from the double gripper (26) by a protection unit (39).

6. The processing center of claim 5, **characterized in that** the protection unit (39) may be activated contactless, in particular by a light barrier or a scanner.

## Revendications

1. Centre d'usinage avec une table porte-pièce (22) qui n'est pas mobile horizontalement, une table de montage (30) en dehors et sur le côté arrière du centre d'usinage et un dispositif de changement de pièces (37) pour le déplacement de pièces et/ou de palettes de pièces (31, 32) à usiner entre la table de montage (30) et la table porte-pièce (22) du centre d'usinage, le dispositif de changement de pièces (37) possédant une double pince (26) pouvant pivoter autour d'un axe vertical et mobile linéairement dans un plan se trouvant perpendiculaire à cet axe pour les pièces et/ou les palettes de pièces (31, 32), **caractérisé en ce que** la table de montage (30) est disposée en dehors de la zone de pivotement de la double pince (26) et **en ce que** la double pince (26) est mobile côté machine et poste de montage via un dispositif de guidage linéaire qui est réalisé comme une rallonge télescopique (36) coulissante de part et d'autre.

2. Centre d'usinage selon la revendication 1 ou 2, **caractérisé en ce que** le dispositif de changement de pièces (37) et la table de montage (30) sont disposés de manière stationnaire sur un châssis de base (35) séparé du centre d'usinage.

3. Centre d'usinage selon la revendication 1 ou 2, **caractérisé en ce que** la rallonge télescopique est réalisée comme une rallonge télescopique double (36).

4. Centre d'usinage selon l'une quelconque des revendications 1 à 3, **caractérisé en ce que** la table de montage (30) est réalisée comme un chargeur de pièces rotatif avec des postes de montage intégrés.

5. Centre d'usinage selon l'une quelconque des revendications 1 à 4, **caractérisé en ce que** la table de montage (30) est séparée par un dispositif de protection (39) de la double pince (26).

6. Centre d'usinage selon la revendication 5, **caractérisé en ce que** le dispositif de protection (39) peut être activé sans contact, en particulier par une barrière lumineuse ou un scanner.
